# EUROPÄISCHE PATENTSCHRIFT

(11) **EP 1 440 825 B1**
(45) Veröffentlichungstag und Bekanntmachung des Hinweises auf die Patenterteilung: **19.07.2006**
(21) Anmeldenummer: 04000794.0
(22) Anmeldetag: 16.01.2004
(51) Int. Cl.: B60G 15/06

(54) **Federbeinstützlager**
Strut support bearing
Palier supportant la jambe de suspension

(30) Priorität: 21.01.2003 DE 10302413
(43) Veröffentlichungstag der Anmeldung: 28.07.2004
(73) Patentinhaber: ZF Boge Elastmetall GmbH, 49401 Damme (DE)
(72) Erfinder: Schäfer, Christof, 53489 Sinzig (DE)

(56) Entgegenhaltungen:
- EP-A- 0 816 140
- DE-C- 3 032 199
- US-A- 4 465 296
- PATENT ABSTRACTS OF JAPAN Bd. 0130, Nr. 36 (M-790), 26. Januar 1989 (1989-01-26) & JP 63 246525 A (TOYOTA MOTOR CORP; others: 01), 13. Oktober 1988 (1988-10-13)

## Beschreibung

Die Erfindung bezieht sich auf ein Lager für Radaufhängungen in einem Kraftfahrzeug, bestehend aus einem im vertikalen Schnitt topfförmigen, metallischen Gehäuse, einem in diesem Gehäuse angeordneten Gummipuffer, einem mit einem Kolben-Zylinder-Aggregat verbindbaren Tragstück, welches im Gummipuffer fixiert ist.

Es sind bereits Federbeinstützlager bekannt (zum Beispiel DE 30 32 199 C1, EP 0 816 140 B1), bei denen ein Gummipuffer in einem topfförmigen, metallischen Gehäuse angeordnet ist, wobei der Dämpfer mit einem im Gummipuffer angeordneten Tragstücknachfolgend Innenteil genannt, fixiert ist. Nachteilig ist hierbei, dass der Gummipuffer zwischen zwei ebenen Flächen vorgespannt ist, so dass diese Vorspannung direkt auf die Gummifeder wirkt und dabei die Gummifeder komprimiert. Durch eine Komprimierung der Gummifeder wird der mögliche Verformungsweg des Gummipuffers reduziert, so dass Isolationspotential für den Schwingungsdämpfer abnimmt.

Des Weiteren zeigt die JP 63-246525 A bereits ein Federbeinstützlager mit einem Gummipuffer, in welchem ein Armierungsteil angeordnet ist. Ein Kolben-Zylinder-Aggregat stützt sich hierbei über ein Gehäuse sowie einer Scheibe gegen den Gummipuffer ab, wobei der Gummipuffer zwischen der Scheibe und dem Gehäuse unter Einschließung des Armierungsteiles vorgespannt wird. In Nachteiliger Weis is das Gehäuse aber dem Kolben-Zylinder-Aggregat zugeordnet und offen gestaltet, so dass die zu federnden Massen erhöht sind und keinerlei Sicherung des Kulben-Zylinder-Aggregates gegen ein Abreißen gegeben ist.

Hiervon ausgehend ist es Aufgabe der Erfindung, ein Lager zu schaffen, bei dem ein Gummipuffer in einem topfförmigen, metallischen Gehäuse angeordnet ist, in der Weise, dass bei der Befestigung des Lagers an der Karosserie der Gummipuffer nicht derart vorgespannt ist, dass eine negative Auswirkung auf die Isolation und Dämpfungseigenschaften des Kolben-Zylinder-Aggregats auswirkt.

Als Kolben-Zylinder-Aggregate werden z.B. Schwingungsdämpfer, Federbeine oder selbstpumpende Federbeine mit Niveauregelung verstanden.

Zur Lösung dieser Aufgabe ist erfindungsgemäß vorgesehen, dass im Gummipuffer ein Armierungsteil angeordnet ist, welches sich axial und/oder radial an der Innenwandung des Gehäuses abstützt. Der Gummipuffer ist dabei in einen Dämpfungspuffer und einen Verspannungspuffer unterteilt.

Mit Vorteil ist hierbei vorgesehen, dass das Armierungsteil ringförmig verlaufend im Gehäuse angeordnet ist, wobei auch andere geometrische Formen denkbar sind.

Eine weitere Ausführungsform sieht vor, dass das ringförmig verlaufende Armierungsteil ausgehend vom Gehäuse einem sich verkleinernden Innendurchmesser aufweist.

Vorteilhaft ist hierbei, dass durch Verschrauben des Lagers mit der Karosserie des Fahrzeuges die Vorspannung mit einer zusätzlichen Gummischicht des Gummipuffers aufgenommen wird, die sich über die Metallarmierung nach außen auf dem Gehäuse des Lagers abstützt. Es ist auch eine partielle Abstützung denkbar. Hierbei wird der übrige Teil des Gummipuffers nicht beeinflusst, so dass das Kolben-Zylinder-Aggregat mit seiner Befestigung am Innenteil axial und/oder radial und/oder kardanisch beweglich ist und nach oben und unten durch diesen Teil des Gummipuffers abgestützt bzw. gedämpft wird.

Eine weitere Ausführungsform sieht vor, dass das im Gummipuffer aufgenommene Innenteil axial beweglich angeordnet ist. Vorteilhaft ist hierbei, dass das Innenteil vollständig im Gummipuffer eingebettet ist, der für die Dämpfung maßgebend ist.

In Ausgestaltung der Erfindung ist vorgesehen, dass der Gummipuffer derart bemessen ist, dass der Verspannungspuffer aus dem topfförmigen Gehäuse herausragt. Vorteilhaft ist hierbei, dass bei Verspannung des Gehäuses gegenüber der Fahrzeugkarosserie der herausragende Teil des Verspannungspuffers eine Vorspannung bewirkt, die jedoch über das Armierungsteil sich an der Innenwandung des Gehäuses abstützt und damit nicht den unteren, das Innenteil aufweisenden, Teil des Gummipuffers beeinflusst.

Eine einfache Befestigung des Kolben-Zylinder-Aggregats am Lager ist vorgesehen, indem dass zur Befestigung des Kolben-Zylinder-Aggregats der Gummipuffer, das Innenteil und das Gehäuse mit einer Durchgangsbohrung versehen sind. Allerdings kann das Gewinde der Kolbenstange auch direkt im Innenteil verschraubt werden.

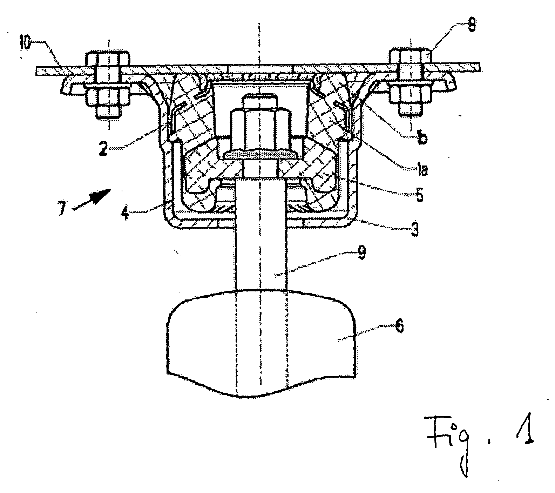

Bevorzugte Ausführungsbeispiele der Erfindung sind in der Figur 1 schematisch dargestellt.

Das in der Figur 1 dargestellte Lager 7 ist über die Verschraubungen 8 mit der Karosserie eines Kraftfahrzeuges verbunden, während die Kolbenstange 9 des Kolben-Zylinder-Aggregats 6 im Lager 7 aufgenommen und fixiert ist.

Im topfförmigen Gehäuse 3 des Lagers 7 ist zunächst der Gummipuffer 1 aufgenommen, wobei der obere Bereich als Verspannungspuffer 1b des Gummipuffer sich über das Armierungsteil 2 an der Innenwandung 4 des Gehäuses 3 abstützt. Im unteren Teil des Gummipuffers 1 ist das Innenteil 5 im Dämpfungspuffer 1a des Gummipuffers 1 eingebettet und erlaubt durch die entsprechenden Durchgangsbohrungen sowohl des Gummipuffers 1, des Innenteiles 5 als auch des Gehäuses 3 eine Befestigung der Kolbenstange 9 am Innenteil 5.

Durch die Einbettung des Innenteiles 5 in dem Gummipuffer 1 wird dem Kolben-Zylinder-Aggregats 6 bzw. der Kolbenstange 9 erlaubt, dass das Innenteil 5 gegenüber dem Gummipuffer 1 axiale und/oder radiale und/oder kardanische Bewegungen ausführen kann, indem die entsprechenden benachbarten Teile des Gummipuffers 1 durch das Innenteil 5 komprimiert bzw. entlastet werden.

Durch diese Art der Befestigung wird der Gummipuffer 1 im oberen Bereich mit Vorspannung zwischen der Fahrzeugkarosserie 10 und dem Gehäuse 3 des Lagers 7 aufgenommen, während das Kolben-Zylinder-Aggregat 6 keinerlei Einfluss von der Vorspannung erfährt, so dass eine günstige Abkopplung bzw. Isolation von Schwingungen durch den Gummipuffer 1 vorgenommen werden können. Darüber hinaus wird neben der Reduzierung des Verformungsweges und des Isolationspotentials auch eine härtere kardanische Kennlinie erzeugt.

Das Armierungsteil 2 lässt sich gleichzeitig zur Verstärkung der Karosserie in diesem Bereich heranziehen. Der Verspannungspuffer 1b ist als Dichtteil zwischen Karosserie und Gehäuse einsetzbar.

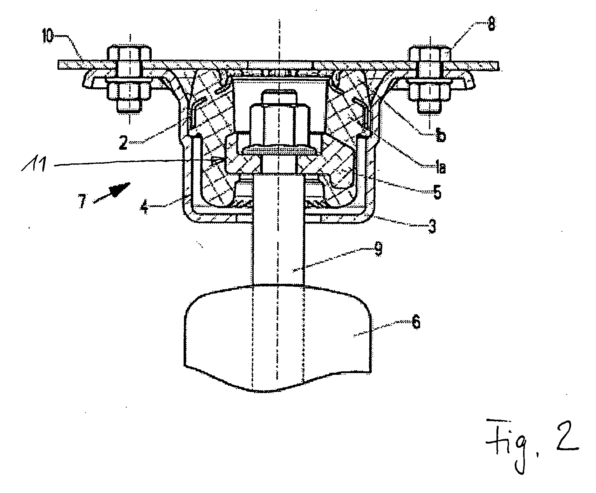

In der Figur 2 ist das Innenteil 5 in der linken Bildhälfte 11 nicht ausgeprägt, so dass eine unterschiedliche kardanische Weichheit vorhanden ist.

Sowohl in Figur 1 als auch in Figur 2 lässt sich mit dem Verspannungspuffer 1b auch eine Dämpfungs- und/oder Entkopplungsfunktion erzielen.

Der untere Bereich des Dämpfungspuffers 1a könnte sich auch am Boden des Gehäuses 3 abstützen.

### Bezugszeichenliste

- 1 -: Gummipuffer
- 1a -: Dämpfungspuffer
- 1b -: Verspannungspuffer
- 2 -: Armierungsteil
- 3 -: Gehäuse
- 4 -: Innenwandung
- 5 -: Innenteil
- 6 -: Kolben-Zylinder-Aggregat
- 7 -: Lager
- 8 -: Verschraubung
- 9 -: Kolbenstange
- 10 -: Karosserie
- 11 -: Bildhälfte

## Patentansprüche

1. Lager für Radaufhängungen in einem Kraftfahrzeug, bestehend aus einem im vertikalen Schnitt topfförmigen, metallischen Gehäuse (3), einem in diesem Gehäuse (3) angeordneten Gummipuffers (1), einem mit einem Kolben-Zylinder-Aggregat(6) verbindbaren Innenteil (5), welches im Gummipuffer(1) fixiert ist,
**dadurch gekennzeichnet, dass** im Gummipuffer (1) ein Armierungsteil (2) angeordnet ist, welches sich axial und/oder radial an der Innenwandung (4) des Gehäuses (3) abstützt, wobei der Gummipuffer (1) in einem Dämpfungspuffer (1a) und einem Verspannungspuffer (1b) unterteilt ist.

2. Lager nach Anspruch 1,
**dadurch gekennzeichnet, dass** das Armierungsteil (2) ringförmig verlaufend im Gehäuse (3) angeordnet ist.

3. Lager nach Anspruch 1,
**dadurch gekennzeichnet, dass** das im Gummipuffer (1) aufgenommene Innenteil (5) axial und/oder radial und/oder kardanisch beweglich angeordnet ist.

4. Lager nach Anspruch 2,
**dadurch gekennzeichnet, dass** das ringförmig verlaufende Armierungsteil (2) ausgehend vom Gehäuse (3) einem sich verkleinernden Innendurchmesser aufweist.

5. Lager nach Anspruch 1
**dadurch gekennzeichnet, dass** der Gummipuffer (1) derart bemessen ist, dass der Verspannungspuffer (1b) aus dem topfförmigen Gehäuse (3) herausragt.

6. Lager nach Anspruch 1,
**dadurch gekennzeichnet, dass** zur Befestigung des Kolben-Zylinder-Aggregats (6) der Gummipuffer (1), das Innenteil (5) und das Gehäuse (3) mit einer Durchgangsbohrung versehen sind.

## Claims

1. Bearing for wheel suspensions in a motor vehicle, consisting of a metallic housing (3) which is cup-shaped in a vertical section, a rubber buffer (1) disposed in this housing (3), an inner part (5) which can be connected to a piston-cylinder unit (6) and is fixed in the rubber buffer (1),
**characterised in that** a reinforcement part (2) is disposed in the rubber buffer (1), which part is supported axially and/or radially at the inner wall (4) of the housing (3), wherein the rubber buffer (1) is divided into a damping buffer (la) and a tension buffer (1b).

2. Bearing according to Claim 1,
**characterised in that** the reinforcement part (2) is disposed so as to extend in an annular manner in the housing (3).

3. Bearing according to Claim 1,
**characterised in that** the inner part (5) accommodated in the rubber buffer (3) is disposed such that it can move axially and/or radially and/or like a universal joint.

4. Bearing according to Claim 2,
**characterised in that** the annularly extending reinforcement part (2) has an inside diameter which decreases from the housing (3) .

5. Bearing according to Claim 1,
**characterised in that** the rubber buffer (1) is dimensioned such that the tension buffer (1b) projects out of the cup-shaped housing (3) .

6. Bearing according to Claim 1,
**characterised in that** the rubber buffer (1), the inner part (5) and the housing (3) are provided with a through-bore in order to fasten the piston-cylinder unit (6).

## Revendications

1. Palier pour suspension de roue dans un véhicule automobile, composé d'un boîtier métallique (3) en forme de cloche, vu en section verticale, d'un tampon en caoutchouc (1) associé à ce boîtier (3), d'un élément intérieur (5) pouvant être relié à un ensemble piston-cylindre (6), élément qui est fixé dans le tampon en caoutchouc (1),
**caractérisé en ce qu'**un élément de renfort (2) est disposé dans le tampon en caoutchouc (1), s'appuyant axialement et/ou radialement sur la paroi intérieure (4) du boîtier (3), le tampon en caoutchouc (1) étant divisé en un tampon amortisseur (la) et un tampon de serrage (1b).

2. Palier selon la revendication 1, **caractérisé en ce que** l'élément de renfort (2) est disposé à l'intérieur du boîtier (3) en s'étendant de façon annulaire.

3. Palier selon la revendication 1, **caractérisé en ce que** l'élément intérieur (5) reçu dans le tampon en caoutchouc (1) est monté de façon axialement et/ou radialement mobile et/ou de façon mobile en mouvements de cardan.

4. Palier selon la revendication 2, **caractérisé en ce que** l'élément de renfort s'étendant de façon annulaire (2) présente un diamètre intérieur décroissant à partir du boîtier (3).

5. Palier selon la revendication 1, **caractérisé en ce que** les dimensions du tampon en caoutchouc (1) sont calculées de manière telle que le tampon de serrage (1b) fasse saillie hors du boîtier en forme de cloche (3).

6. Palier selon la revendication 1, **caractérisé en ce que**, pour pouvoir fixer l'ensemble piston-cylindre (6), le tampon en caoutchouc (1), l'élément intérieur (5) et le boîtier (3) sont pourvus d'un perçage traversant.
